Europäisches Patentamt

(19) European Patent Office

Office européen des brevets

(11) Publication number: **0 248 540**

**A1**

## EUROPEAN PATENT APPLICATION

(21) Application number: **87304048.9**

(22) Date of filing: **06.05.87**

(51) Int. Cl.⁴: **E04H 15/44** , E04H 15/48 , E04B 1/344

(30) Priority: **07.05.86 IL 78714**

(43) Date of publication of application:
**09.12.87 Bulletin 87/50**

(84) Designated Contracting States:
**AT BE CH DE ES FR GB GR IT LI LU NL SE**

(71) Applicant: **THE STATE OF ISRAEL MINISTRY OF DEFENCE ISRAEL MILITARY INDUSTRIES**
**64 Sderoth Bialik P.O.Box 1044**
**Ramat Hasharon 47 100(IL)**

(72) Inventor: **Meller, Yehuda**
**9 Safed Street**
**Holon 58 552(IL)**

(74) Representative: **Brown, John David et al**
**FORRESTER & BOEHMERT**
**Widenmayerstrasse 4/I**
**D-8000 München 22(DE)**

(54) **A self-locking joint assembly.**

(57) A self-locking joint assembly having first (1) and second (5) arm members with male (2) and female (6) joint components pivotally connected to each other. The male joint component has a slanting surface (3) that matures and cooperates with a slanting surface (10) of a locking pin (9) reciprocable within the second arm member (5) in and out of engagement with the male joint (2) component. The locking pin (9) is biased into engagement with the male joint components (2) and in all positions but the fully unfolded one is depressed out of such engagement. In the fully unfolded position the locking pin snaps into engagement with the male joint component and stop means are provided for preventing any unfolding beyond the fully aligned position. There are also provided manually operable means (12) for withdrawing the locking pin (9) out of engagement with the male joint component whereby the assembly can be folded.

A foldable mine detector pricker is described as one example of the application of the joint assembly.

Fig. 1

## A self-locking joint assembly

### FIELD OF THE INVENTION

The present invention concerns a joint assembly in which two elongated members are articulated to each other in such a way as to be reciprocable between a folded and an unfolded, aligned position.

Joint assemblies of this kind are required in collapsible structures which have to be transported in the collapsed state and be readily unfolded into the fully erected structure in situ. Examples of such applications are foldable stretchers for use by hikers, expeditions, infantry soldiers and the like; foldable field beds; foldable poles, crossbars, braces and the like for the erection of temporary structures such as tents, hangars and the like; foldable bridges; foldable prickers for use as mine detectors and many more.

Joint assemblies of this kind have on the one hand to be of a simple design preferably free of any extreneous locking members such as pins or bolts, which apart from the fact that their insertion requires an additional operation, also tend to get lost; while on the other hand they have to afford complete rigidity in the unfolded position without any degree of freedom and tolerances. It is the object of the present invention to provide such a joint assembly.

### GENERAL DESCRIPTION OF THE INVENTION

With this in view the invention provides a self-locking joint assembly comprising:

i) first and second arm members articulated to each other and swingable between a folded and unfolded, aligned position;

ii) a male joint component integral with the first arm member and having a slanted surface facing away from the folding direction of the assembly;

iii) a female joint component integral with the second arm member and comprising two bearings flanking said male joint component;

iv) pivot means linking said male and female joint components;

v) a locking pin axially reciprocable within said second arm member into and out of engagement with said male joint component, said locking pin being biased into engagement with the male joint component and having a slanted surface facing toward the folding direction of the assembly and complementary with the slanted surface of the male joint component such that in the aligned position of the arm members the locking pin engages the male joint component in that said slanted surfaces bear on each other whereby the assembly is locked in the unfolded aligned position;

vi) means for depressing said locking pin out of engagement with said male joint component in any angular position of the arm member other than alignment, which means are adapted to allow the locking pin to snap into engagement with the male joint component upon alignment;

vii) stop means for arresting the arm members in the unfolded, aligned position; and

viii) means for manually withdrawing said locking pin out of engagement with said male joint component thereby unlocking the joint assembly to enable its folding.

The term "arm member" used herein is meant to signify any two structural components articulated to each other.

When a joint assembly according to the invention is fully unfolded the biasing force acting on the locking pin and driving it into engagement with the male joint component also acts on the complementary slanted surfaces with the result that one force component acts in axial direction while another acts on the pivot, and in consequence any tolerances in axial direction and around the pivot are avoided. Any swinging of the arm members out of the aligned position in a sense opposite to the normal folding sense is avoided by the stop means.

The joint assembly according to the invention is free of any extraneous locking means and can be folded and unfolded in a simple and reliable manner.

A further advantage of a joint assembly according to the invention is its capability of ejecting foreign matter such as sand and dust, thereby to be self-cleaning, which renders it suitable for use under difficult, heavy duty conditions.

The invention also comprises foldable structures fitted with one or more joint assemblies of the kind specified. In such structures a component which in the unfolded state forms a straight bar, rod or the like may comprise several joint assemblies and a corresponding number of arm members.

### DESCRIPTION OF THE DRAWINGS

For better understanding the invention will now be described by way of example only with reference to the accompanying drawings in which:

Fig. I is a perspective view of a joint assembly according to the invention with the second arm member and female joint component shown in section;

Fig. 2 is a cross-section through a joint assembly according to Fig. I drawn to a larger scale and showing the joint in the unfolded, aligned position;

Fig. 3 corresponds to Fig. 2 and shows the joint assembly in the partly folded position; and

Fig. 4 shows a mine detector pricker comprising a plurality of joint assemblies according to the invention.


## DESCRIPTION OF A PREFERRED EMBODIMENT

The joint assembly of Figs. I-3 comprises a first arm member I with an integral male joint component 2 having a slanted surface 3 facing away from the folding direction of the assembly, and opposite thereto a circular surface I4 facing the folding direction. On the two sides of the male joint component arm member I comprises two identical end abutment surfaces 4 serving as stop.

The assembly further comprises a second arm member 5 with an integral female joint component comprising two identical bearings 6. Bearings 6 receive between them the male joint component 2 of arm member I and an axle 7 serving as pivot extends through registering holes of bearings 6 and male joint component 2.

Inside a bore 8 of arm 5 there is reciprocable a locking pin 9 having a slanted surface I0 facing the folding direction of the joint assembly. Pin 9 is biased by means of a helical spring II into the engaging position shown in Figs. I and 2 in which the slanted surfaces 3 and I0 abut each other. In that position abutment surfaces 4 act as stop in that a straight portion of the peripheral surface of each of bearings 6 abuts one of the abutment surfaces 4 (see Fig. I), and in this way any folding of the joint assembly beyond the aligned position in a sense opposite to the folding sense signified by the arrows in Figs. I and 2, is prevented.

It is easily understood from Figs. I and 2 that in the unfolded, aligned position of the joint assembly the slanted surfaces I0 and 3 have the effect that the biasing force exerted on pin 9 by spring II act both in axial direction and on pin 7 with the result that there are practically no tolerances in axial direction and around the pivot 7.

Pin 9 comprises an integral transversal pin I2 rigidly connected to sliding members I3 and in this way pin 9 can be withdrawn manually out of engagement with the male joint component 2 whereby the joint assembly is unlocked and can be folded by swinging arm members I and 5 in the direction of the arrows in Figs. I and 2.

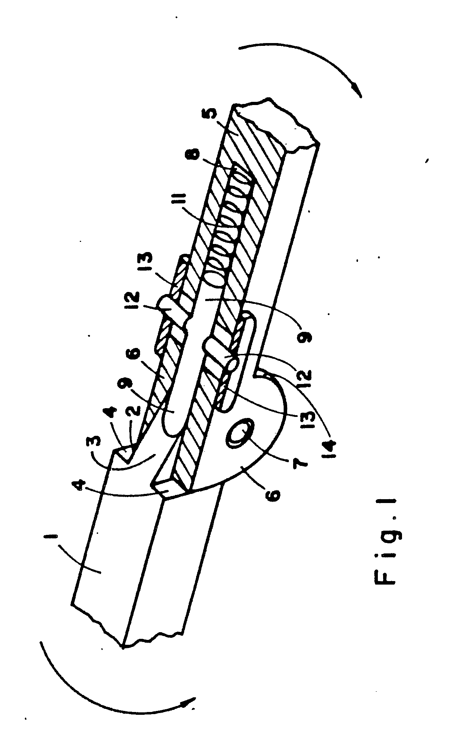

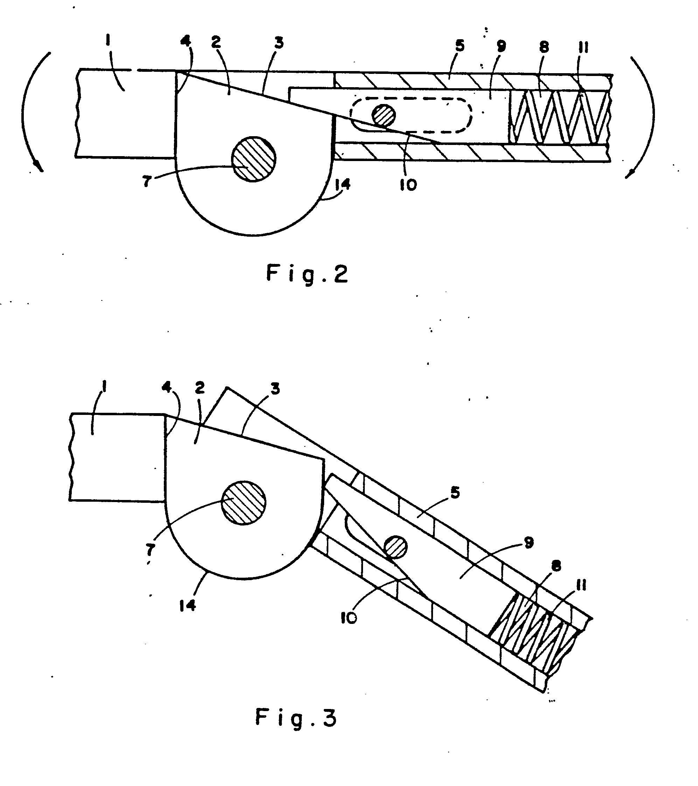

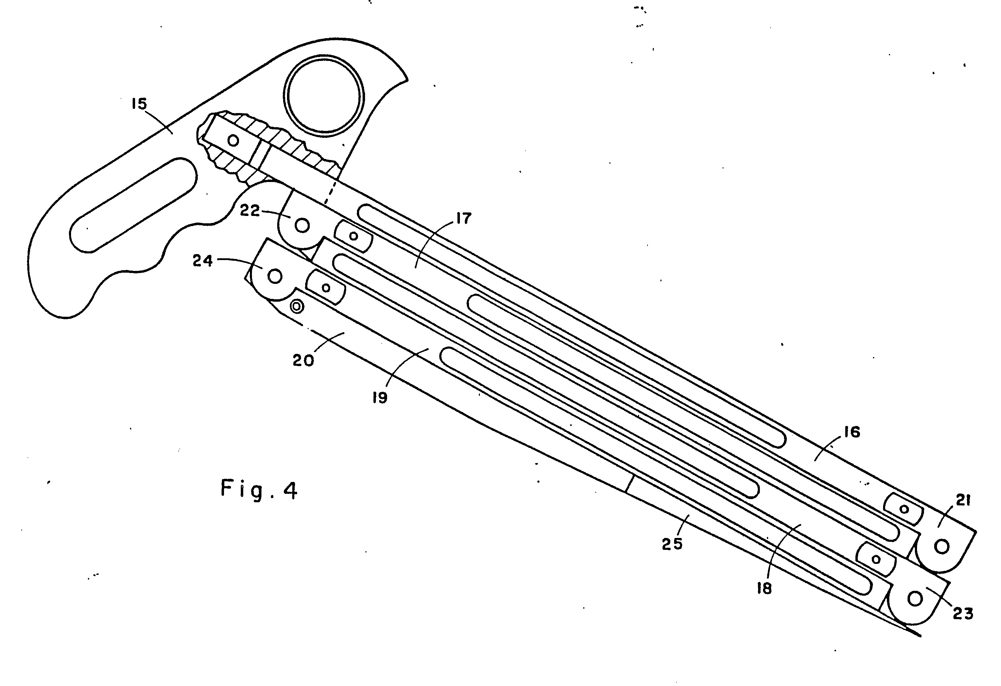

An intermediary position of the joint assembly during folding or unfolding is shown in Fig.3, and it is seen that in that position a circular surface of the male joint component 2 bears on pin 9 pushing it against the biasing action of spring II into a retracted position so that arms I and 5 can be swung freely around pivot 7.

The folded mine detector pricker shown in Fig. 4 is one example of a foldable object embodying joint assemblies according to the invention. As seen the pricker comprises a handle I5 and rods I6, I7, I8, I9 and 20 with each pair of consecutive rods being articulated to each other in accordance with the invention at joints 2I, 22, 23 and 24, each pair of consecutive rods forming with the connecting joint a joint assembly according to the invention of the kind shown in Figs. I-3 and thus forming the arm members of such a joint assembly. The extreme rod 20 comprises a pointed end portion 25 for pricking the soil in order to detect mines therein. The pricker can be unfolded and folded in the manner set out with reference to Figs. I-3 and in the unfolded state rods I6-20 are fully aligned forming a pole which is as rigid as if it were made of one single piece.

Many other foldable structures embodying joint assemblies according to the invention may be made in a similar manner.

The features disclosed in the foregoing description, in the following claims and/or in the accompanying drawings may, both separately and in any combination thereof, be material for realising the invention in diverse forms thereof.


## Claims

I. A self-locking joint assembly comprising:

i) first and second arm members (I,5) articulated to each other and swingable between a folded and unfolded, aligned position;

ii) a male joint component (2) integral with the first arm member (I) and having a slanted surface (3) facing away from the folding direction of the assembly;

iii) a female joint component (6) integral with the second arm member (5) and comprising two bearings (6) flanking said male joint component (7);

iv) pivot means (7) linking said male (2) and female (6) joint components;

v) a locking pin (9) axially reciprocable within said second arm member (5) into and out of engagement with said male joint component (2), said locking pin (9) being biased into engagement with the male joint component (2) and having a slanted surface (l0) facing forward the folding direction of the assembly and complementary with the slanted surface (3) of the male joint component (2) such that in the aligned position of the arm members the locking pin (9) engages the male joint component (2) in that said slanted surfaces (3, l0) bear on each other whereby the assembly is locked in the unfolded aligned position;

vi) means (l4) for depressing said locking pin out of engagement with said male joint component in any angular position of the arm member other than alignment, which means are adapted to allow the locking pin to snap into engagement with the male joint component upon alignment;

vii) stop means (4) for arresting the arm members in the unfolded, aligned position; and

viii) means (l2, l3) for manually withdrawing said locking pin out of engagement with said male joint component thereby unlocking the joint assembly to enable its folding.

2. A joint assembly according to Claim l wherein the male joint component (2) has a circular peripheral surface portion (l4) which is adapted to depress the locking pin during folding and unfolding.

3. A joint assembly according to Claim l or 2 wherein the first arm member (l) comprises on both sides of the male joint member two end surfaces (4) serving as abutments.

4. A joint assembly according to Claim 3 wherein each of said bearings comprises a straight peripheral portion adapted to abut said end surfaces (4) of the first arm member (l) in the unfolded, aligned position of the assembly.

5. A foldable structure fitted with at least one joint assembly according to any one of Claims l to 4.

6. A foldable structure according to Claim 5 being a mine detector pricker.

Fig.1

0 248 540

0 248 540

Fig.2

Fig.3

Fig. 4

15  22  24  20  19  17  16  21  25  18  23

0 248 540

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 286 353 (J.N. ROCHE)<br>* abstract; figures 1, 2 * | 1,5 | E 04 H 15/44<br>E 04 H 15/48<br>E 04 B 1/344 |
| A | WO-A-8 303 861 (AXIOMA)<br>* figure 4 * | 1 | |
| A | US-A-4 271 623 (BERETTA)<br>* figures 2, 5 *<br>----- | 1 | |

|  | TECHNICAL FIELDS SEARCHED (Int. Cl.4) |
|---|---|
|  | F 16 M 11/00<br>E 04 H 15/00<br>E 04 H 12/00<br>E 04 B 1/00<br>F 16 B 1/00<br>F 16 S 3/00<br>F 41 H 11/00<br>F 41 C 23/00<br>A 63 B 29/00 |

The present search report has been drawn up for all claims

| Place of search | Date of completion of the search | Examiner |
|---|---|---|
| BERLIN | 06-08-1987 | SCHAEFFLER C.A.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82